# EUROPEAN PATENT APPLICATION

(11) **EP 3 795 342 A1**
(43) Date of publication of application: **24.03.2021**
(21) Application number: 19803770.7
(22) Date of filing: 15.05.2019
(51) Int. Cl.: B29D 15/00, B29C 45/14, B29C 69/02, B29C 70/10, B29C 70/30, F16H 55/16, B29K 105/08, B29L 15/00

(54) **SPUR GEAR COMPONENT, SPUR GEAR, AND MANUFACTURING METHOD OF SPUR GEAR COMPONENT**

(30) Priority: 17.05.2018 JP 2018095677
(71) Applicant: ENEOS Corporation, Chiyoda-ku Tokyo 100-8162 (JP); Kabushiki Kaisha Yaskawa Denki, Kitakyushu-shi, Fukuoka 806-0004 (JP)
(72) Inventor: SHINAGAWA Masaaki, Tokyo 100-8162 (JP); KUBOTA Yoshiaki, Kitakyushu-shi, Fukuoka 806-0004 (JP); NONAKA Tuyoshi, Kitakyushu-shi, Fukuoka 806-0004 (JP)
(74) Representative: Grünecker Patent- und Rechtsanwälte PartG mbB
(86) International application number: PCT/JP2019/019372
(87) International publication number: WO 2019/221197

(57) **Abstract**

Provided is a spur gear component including a plurality of teeth protruding in a radial direction, extending in an axial direction, and arranged at equal pitches in a circumferential direction, the spur gear component including a fiber material having a shape corresponding to an arrangement pattern of the plurality of teeth and wound in a spiral shape around a center axis.

## Description

### Technical Field

An embodiment of the present invention relates to a spur gear component, a spur gear, and a spur gear component manufacturing method.

### Background Art

As a method of manufacturing a gear using a fiber material, one described in Patent Literature 1 is known. In this manufacturing method, a band-shaped semi-molded product having a straight tooth shape is molded by molding a band-shaped prepreg. Then, a spur gear molded product is obtained by rolling the band-shaped semi-molded product in a cylindrical shape to prepare a cylindrical semi-molded product, installing the cylindrical semi-molded product in a mold, and performing a molding operation.

### Citation List

### Patent Literature

Patent Literature 1: Japanese Unexamined Patent Publication No. 2011-25466

### Summary of Invention

### Technical Problem

Here, in the above-described spur gear component manufacturing method, the band-shaped member of the fiber material of which the width dimension is set to be the same as the size of the spur gear component in the width direction in advance is used. That is, the entire length of the tooth of the spur gear component in the width direction is the same as the entire length of the band-shaped member in the width direction. Here, both end portions of the band-shaped member in the extension direction serve as the cut portions of the fiber material. Thus, the spur gear component described in Patent Literature 1 is in a state in which the cut portions of the fiber material are continuously arranged over the entire length of the tooth in the width direction. In this case, a problem arises in that the strength of the tooth decreases.

An object of the present invention is to provide a spur gear component capable of obtaining a spur gear capable of improving strength, a spur gear capable of improving strength, and a spur gear component manufacturing method capable of obtaining such a spur gear.

### Solution to Problem

A spur gear component according to an embodiment of the present invention is a spur gear component including a plurality of teeth protruding in a radial direction, extending in an axial direction, and arranged at equal pitches in a circumferential direction, the spur gear component including a fiber material having a shape corresponding to an arrangement pattern of the plurality of teeth and wound in a spiral shape around a center axis.

The spur gear component according to an embodiment of the present invention includes the fiber material having a shape corresponding to the arrangement pattern of the plurality of teeth and wound in a spiral shape around the center axis. In this case, since the plurality of teeth are composed of the wound fiber material, the strength of the tooth can be made higher than that of the tooth of the spur gear formed by molding only the resin material. Here, the fiber material is wound in a spiral shape. In this case, a cut portion is formed at a winding starting end portion and a winding finishing end portion of the fiber material, but the fiber material extends continuously without cutting at another orbital portion arranged in parallel in the axial direction. In this way, in the spur gear component, it is possible to prevent a portion in which the cut portion of the fiber material is continuously formed over the entire axial direction, that is, the entire length of the width of the tooth. As described above, the strength of the spur gear can be improved.

In the spur gear component, one end portion and the other end portion of the fiber material in a longitudinal direction may be disposed at different positions in the circumferential direction. One end portion and the other end portion of the fiber material are located at the positions of the cut portions of the fiber material in which the strength of the spur gear component decreases. When one end portion and the other end portion are shifted in the circumferential direction, it is possible to suppress a portion where the strength decreases from being concentrated at a specific position in the circumferential direction.

In the spur gear component, the fiber material may be wound in parallel in an axial direction. In this case, since the fiber material is wound in parallel, the fiber material can easily follow the shape of the mold when molding the arrangement pattern of the teeth.

A spur gear according to an embodiment of the present invention is a spur gear including: a spur gear component that includes a plurality of teeth protruding in a radial direction, extending in an axial direction, and arranged at equal pitches in a circumferential direction; and a base portion formed on an inner peripheral side of the spur gear component, in which the spur gear includes a fiber material having a shape corresponding to an arrangement pattern of the plurality of teeth and wound in a spiral shape around a center axis, and in which the base portion is formed by a resin molded body fixed to the spur gear component.

According to the spur gear according to an embodiment of the present invention, the same action and effect as the above-described spur gear component can be obtained. Further, the base portion is formed by the resin molded body fixed to the spur gear component. In this way, since a portion that does not require strength compared to the portion of the tooth is formed by the resin molded body, the weight of the entire spur gear can be made light.

A spur gear component manufacturing method according to an embodiment of the present invention is a method of manufacturing a spur gear component including a plurality of teeth protruding in a radial direction, extending in an axial direction, and arranged at equal pitches in a circumferential direction, including: forming an annular member by winding a fiber material in a spiral shape around a center axis; and forming a shape of the tooth in the annular member.

According to the spur gear component manufacturing method according to an embodiment of the present invention, the same action and effect as the above-described spur gear component can be obtained.

In the spur gear component manufacturing method, in the forming of the shape of the tooth, an inner peripheral side of the annular member may be supported by an inner peripheral mold and a plurality of outer peripheral molds divided in a circumferential direction may be pressed against the annular member from an outer peripheral side to form the shape of the tooth. In this case, the tooth having a shape corresponding to the shape of the mold can be easily formed on the front surface of the annular member.

### Advantageous Effects of Invention

According to an embodiment of the present invention, it is possible to provide a spur gear component capable of obtaining a spur gear capable of improving strength, a spur gear capable of improving strength, and a spur gear component manufacturing method capable of obtaining such a spur gear.

### Brief Description of Drawings

FIG. 1 is a perspective view illustrating a spur gear according to this embodiment.
FIG. 2(a) is a schematic view illustrating a state of a fiber material of a spur gear component and FIG. 2(b) is an enlarged view illustrating an arrangement state of the fiber material in an area of a part of the spur gear component.
FIG. 3 is a flowchart illustrating a flow of a spur gear manufacturing method.
FIG. 4(a) is a diagram illustrating a winding device and FIG. 4(b) is a diagram illustrating an annular member.
FIGS. 5(a), 5(b), and 5(c) are diagrams illustrating a molding device.
FIG. 6 is a perspective view of the spur gear component.
FIG. 7 is a diagram illustrating a state of insert-molding.
FIGS. 8(a) and 8(b) are schematic views illustrating a spur gear component manufacturing method according to a modified example.

### Description of Embodiments

Hereinafter, preferred embodiments of the present invention will be described in detail with reference to the drawings. Additionally, in the drawings, the same or corresponding parts will be denoted by the same reference numerals and redundant description will be omitted.

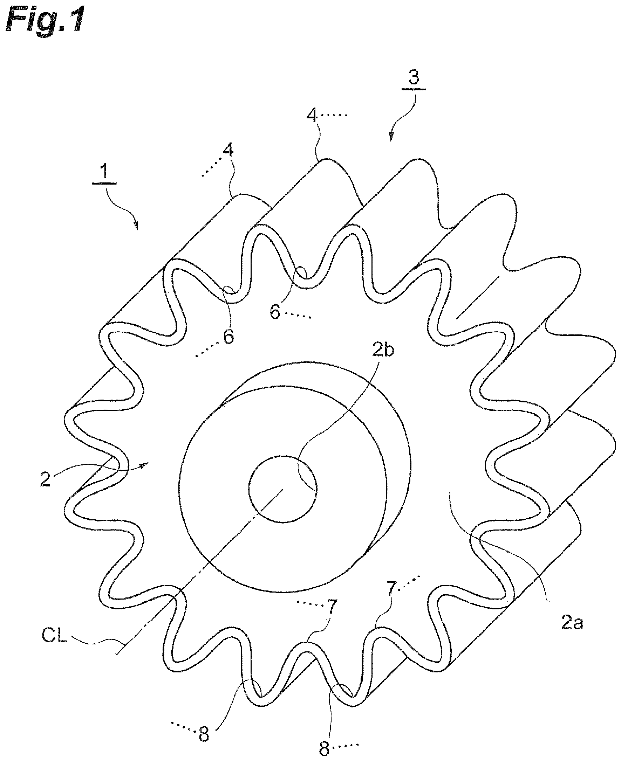

As illustrated in FIG. 1, a spur gear 3 includes a spur gear component 1 which is manufactured by a manufacturing method according to this embodiment and a base portion 2 which is formed by injection-molding. A center axis CL is set at the center of the spur gear 3. In the description below, a direction in which the center axis CL extends is referred to as an "axial direction", a direction around the center axis CL is referred to as a "circumferential direction", and a direction in which a line passing through the center axis CL and orthogonal to the center axis CL extends is referred to as a "radial direction". Further, the terms of "outer periphery" and "inner periphery" based on the center axis CL are used.

The spur gear component 1 is an annular member which includes a plurality of teeth 4. That is, the spur gear component 1 constitutes a ring gear used as a tooth member of the spur gear 3. The tooth 4 of the spur gear component 1 protrudes in the radial direction, extends in the axial direction, and is disposed at a plurality of positions at equal pitches in the circumferential direction. A valley portion 6 which meshes with a mating gear is formed between the tooth 4 and the tooth 4. The plurality of teeth 4 are formed on an outer peripheral surface of the annular member. In this embodiment, the tooth 4 extends straightly in the axial direction. Additionally, the shape of the tooth 4 is not particularly limited. The spur gear component 1 is manufactured by using a fiber material. A method of manufacturing the spur gear component 1 will be described in detail later.

The spur gear component 1 has an arrangement pattern of a plurality of mountain portions 7 and a plurality of valley portions 8 on an inner peripheral surface. The arrangement pattern of the inner peripheral surface corresponds to the arrangement pattern of the teeth 4 and the valley portions 6 of the outer peripheral surface. The spur gear component 1 includes the valley portion 8 formed on the inner peripheral surface at a position in which the tooth 4 is formed on the outer peripheral surface. The spur gear component 1 includes the mountain portion 7 formed on the inner peripheral surface at a position in which the valley portion 6 is formed on the outer peripheral surface. With such a structure, the uniformity of the thickness of the spur gear component 1 is improved and the moldability of the spur gear component 1 is improved.

The base portion 2 is a member that supports the spur gear component 1 and ensures the strength of the spur gear 3. The base portion 2 has a shape in which an area on the inner peripheral side of the spur gear component 1 is buried. The spur gear component 1 is provided along the outer peripheral surface of the base portion 2. A through-hole 2b to which a rotation shaft (not illustrated) of the spur gear 3 is attached is formed at the center position of the base portion 2. The base portion 2 is formed by injection-molding. At the time of manufacturing, the injection-molding is performed while the spur gear component 1 is installed in an injection-molding mold. Accordingly, the spur gear component 1 is fixed to the base portion 2.

Here, as will be described in detail in the manufacturing method to be described later, the spur gear component 1 is manufactured in such a manner that a fiber material 10 is wound in a spiral shape to form an annular member 20 and the shape of the tooth 4 is formed in the annular member 20. Thus, the spur gear component 1 includes the fiber material 10 having a shape corresponding to the arrangement pattern of the plurality of teeth 4 and wound around the center axis CL in a spiral shape. Additionally, in this embodiment, as will be described in detail in the manufacturing method to be described later, the annular member 20 is formed in such a manner that one continuous fiber material 10 is wound around a core member a plurality of times in a spiral shape to form a layer of the fiber material 10 and such spiral winding is performed in a reciprocating manner in the axial direction. Accordingly, the annular member is formed by forming a plurality of layers of the fiber material 10. That is, in this embodiment, a description will be made below such that the spur gear component 1 is composed of one continuous fiber material 10. Additionally, in this specification, the "fiber material" refers to a wire for one fiber. For example, a member called a tow prepreg in which a plurality of fiber materials are twisted and impregnated with a resin is known, but the fiber material of this embodiment corresponds to one wire in a non-twisted state.

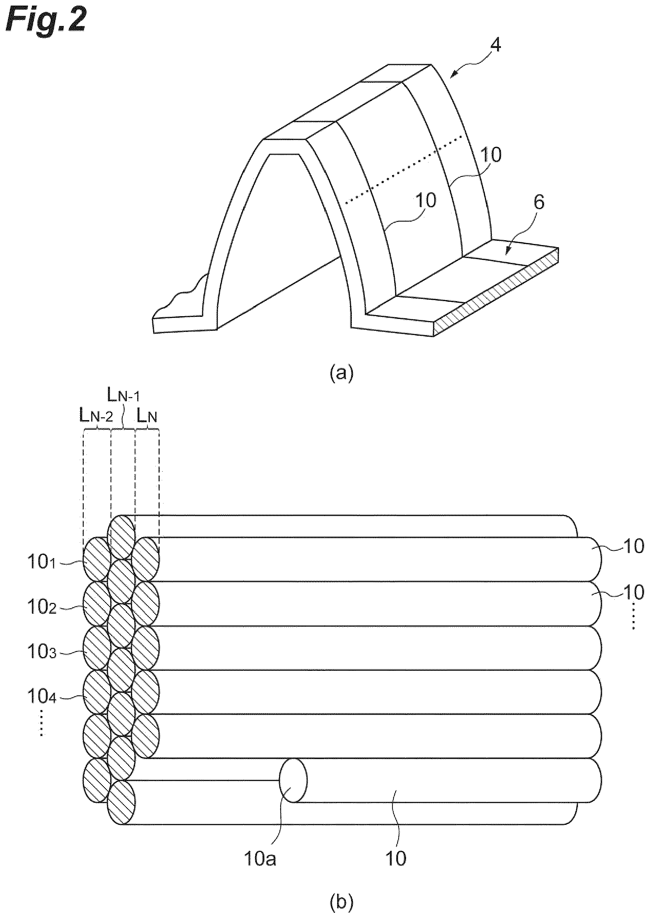

As illustrated in FIG. 2(a), the fiber material 10 is bent at a position corresponding to the tooth 4 to protrude in a mountain shape toward the outer peripheral side in accordance with the shape of the tooth 4. Further, the fiber material 10 is bent at a position corresponding to the valley portion 6 to be recessed toward the inner peripheral side in accordance with the shape of the valley portion 6. Further, the plurality of fiber materials 10 with such a shape are arranged in the radial direction and the axial direction. Additionally, a state in which the plurality of fiber materials 10 are arranged is a state in which one orbital portion and another orbital portion of one fiber material 10 are arranged. Further, FIG. 2(a) illustrates only the shape of the fiber material 10 located closest to the front surface side (a part of the fiber material 10 in the longitudinal direction), but the fiber material 10 disposed inside the corresponding position in the radial direction has a mountain shape and a valley shape corresponding to the position. Further, the fiber material 10 disposed on the inner peripheral surface side has a shape corresponding to the mountain portion 7 and the valley portion 8 on the inner peripheral surface side.

FIG. 2(b) is an enlarged view illustrating an arrangement state of the fiber material 10 in an area of a part of the spur gear component 1. In FIG. 2(b), the up and down direction of the paper surface corresponds to the axial direction of the spur gear component 1 and the front and rear direction of the paper surface corresponds to the radial direction. As illustrated in FIG. 2(b), the fiber materials 10 are wound in parallel in the axial direction. Further, the fiber materials 10 are also wound in parallel in the radial direction. The parallel state is a state in which the fiber material 10 associated with one orbital portion and the fiber material 10 associated with another orbital portion extend in the same direction and are arranged in substantially parallel. Additionally, the fiber materials 10 of the orbital portions may not be perfectly parallel to each other and may be deviated from the parallel state due to distortion during molding or the like. For example, when the spur gear component 1 is manufactured using a tow prepreg, the plurality of fiber materials 10 are twisted together and each fiber has a twisted relationship with each other. Such a state does not correspond to a state in which the fiber materials 10 of this embodiment are parallel to each other (corresponding to a modified example to be described later). Additionally, also in the spur gear component 1 according to this embodiment, the fiber materials 10 may not be parallel to each other due to the local disturbance of the fiber material 10 or the like in any part of the radial direction, the circumferential direction, and the axial direction.

In this embodiment, the fiber material 10 is wound around the center axis in a spiral shape. Thus, the orbital portions adjacent to each other in the axial direction are composed of one continuous fiber material 10. For example, as illustrated in FIG. 2(b), an orbital portion 10₁ is composed of one continuous fiber material 10, an orbital portion 10₂ is formed at a position adjacent to the orbital portion 10₁ in the axial direction, and orbital portions 10₃, 10₄ ... are formed in the same way. By the combination of such orbital portions, a layer L_{N-2} of the fiber material 10 is formed. Further, layers L_{N-1} and L_{N} are formed at a position adjacent to the layer L_{N-2} on the outer peripheral side. The layers L_{N-2}, L_{N-1}, and L_{N} are composed of one continuous fiber material 10.

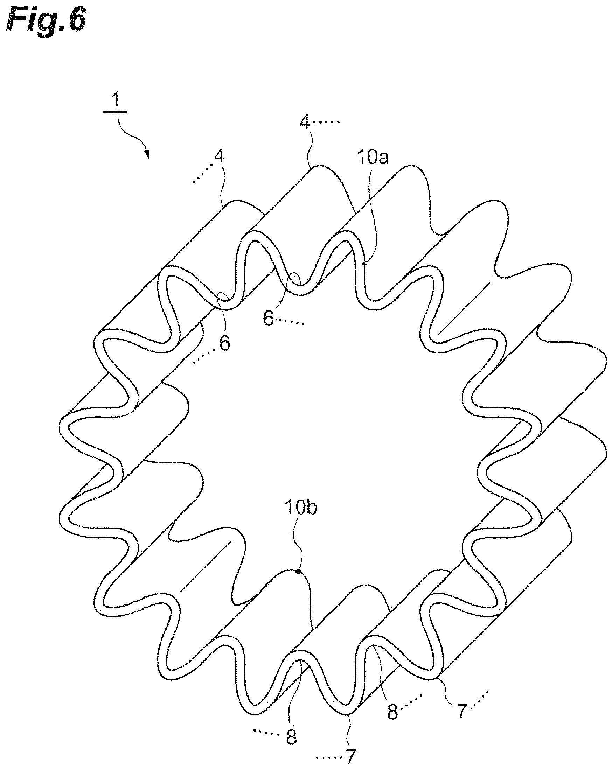

As illustrated in FIG. 6, one end portion 10a and the other end portion 10b of the fiber material 10 in the longitudinal direction are disposed at different positions in the circumferential direction. The spur gear component 1 is formed by winding the fiber material 10 in a spiral shape a plurality of times. Thus, the other end portion 10b is disposed at the winding starting position of the annular member 20 to be described later and one end portion 10a is disposed at the winding finishing position thereof. The end portions 10a and 10b also correspond to a position between the fiber materials 10 (see FIG. 2(b)). Additionally, in this embodiment, since the spur gear component 1 is formed by winding one fiber material 10, the end portions 10a and 10b are very small compared to the size of the entire spur gear component 1. Thus, in FIG. 6, the positions of the end portions 10a and 10b are indicated by dots. In FIG. 6, the end portion 10b is disposed at a position on one end side in the axial direction of the inner peripheral surface of the spur gear component 1 and the end portion 10a is disposed at a position on the other end side in the axial direction of the outer peripheral surface of the spur gear component 1. Additionally, since the positions of the end portions 10a and 10b in the axial direction can be appropriately changed depending on where the winding starting and finishing end positions of the fiber material 10 are set, the positions are not limited to the positions illustrated in FIG. 6. Further, the positions of the end portions 10a and 10b in the circumferential direction are not also limited to the positions illustrated in FIG. 6 and can be appropriately changed.

Additionally, the fiber material 10 is a continuous fiber in which a fiber is continuous in the longitudinal direction. As the fiber material 10, fibers having high strength and high elastic modulus such as carbon fibers, glass fibers, aramid fibers, silicon carbide fibers, and alumina fibers can be used alone or in combination. From the viewpoint of the strengthening efficiency of the strength of the spur gear component 1 and imparting functions such as dimensional stability, corrosion resistance, slidability, antistatic property, and weight reduction thereto, carbon fibers are most preferable among these fibers.

Further, the spur gear component 1 contains a resin for maintaining the shape of the fiber material 10 formed in a desired shape. The resin is contained in the entire spur gear component 1 and hardens the fiber material 10 while the arrangement pattern of the teeth 4 is formed. As such a resin, for example, a thermoplastic resin is adopted. Although the thermoplastic resin is selected from the required functions of the spur gear component 1, nylon, polyester, polypropylene, polycarbonate, ABS, polyphenylene oxide, polyphenylene sulfide, their polymer alloys, and the like are used in general and particularly when strength or heat resistance is required, polyetherketone, polyetheretherketone, polyetherketoneketone, polyetherimide, polyethersulfone, and the like are used.

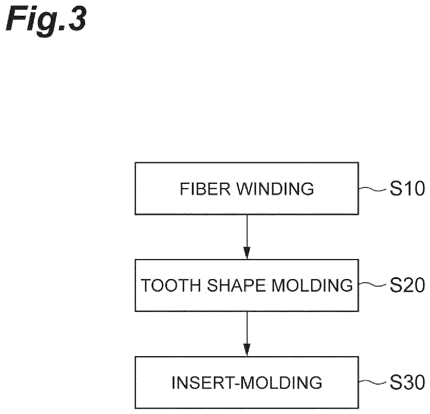

Next, a method of manufacturing the spur gear 3 according to this embodiment will be described with reference to FIGS. 3 to 11. As illustrated in FIG. 3, the method of manufacturing the spur gear 3 includes Step S10 of winding a fiber, Step S20 of molding a tooth shape, and Step S30 of performing insert-molding.

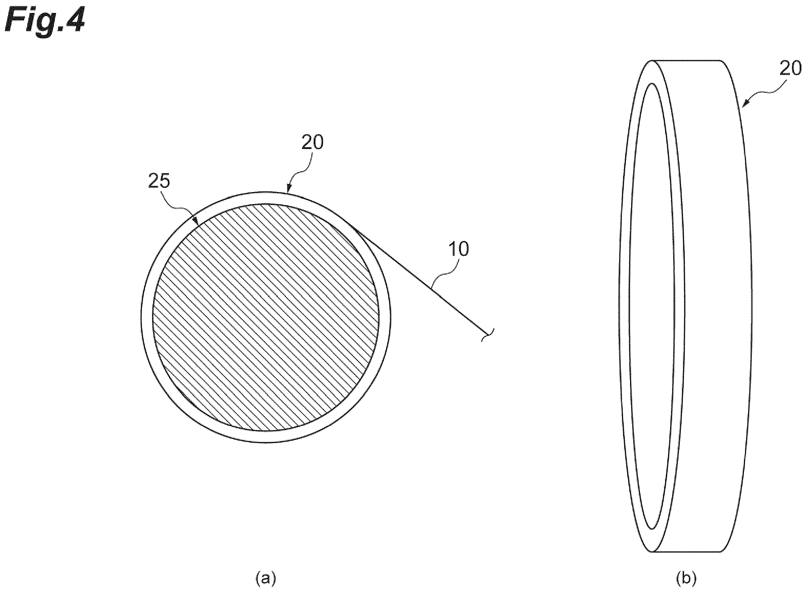

Step S10 is a step of forming the annular member 20 by winding the fiber material 10. In Step S10, the annular member 20 illustrated in FIG. 4(b) is formed by winding the fiber material 10 using, for example, the winding device 25 illustrated in FIG. 4(a). In the annular member 20, the fiber materials 10 are wound in parallel in the radial direction and the axial direction. The circumferential length of the outer peripheral edge portion of the annular member 20 corresponds to the outermost peripheral surface length of the spur gear component 1.

The winding device 25 includes a columnar core portion. The core portion has an outer peripheral length corresponding to the circumferential length of the inner peripheral edge portion of the annular member 20. Additionally, a pair of regulation plates (not illustrated) which faces each other while being separated from each other by the size of the annular member 20 in the axial direction may be provided in the core portion. At the time of winding, the fiber material 10 is wound in an area between the pair of regulation plates. The winding device 25 fixes the starting end portion of the fiber material 10 to the vicinity of the outer periphery of the core portion 26 and rotates the core portion 26. Additionally, a feeding device (not illustrated) sends the fiber material 10 toward the winding device 25. Accordingly, the winding device 25 winds the fiber material 10 between the regulation plates over a plurality of turns. Additionally, the winding device 25 forms a layer in which the plurality of fiber materials 10 are arranged in the axial direction and forms a plurality of the layers in the radial direction to form the annular member 20.

Additionally, a thermoplastic resin is applied to the annular member 20 before performing the subsequent Step S20. Additionally, a timing at which the thermoplastic resin is applied is not particularly limited and the thermoplastic resin may be applied while winding the fiber material 10, the thermoplastic resin may be applied in advance to the fiber material 10 which will be wound, or the thermoplastic resin may be applied to the annular member 20 which is completely wound.

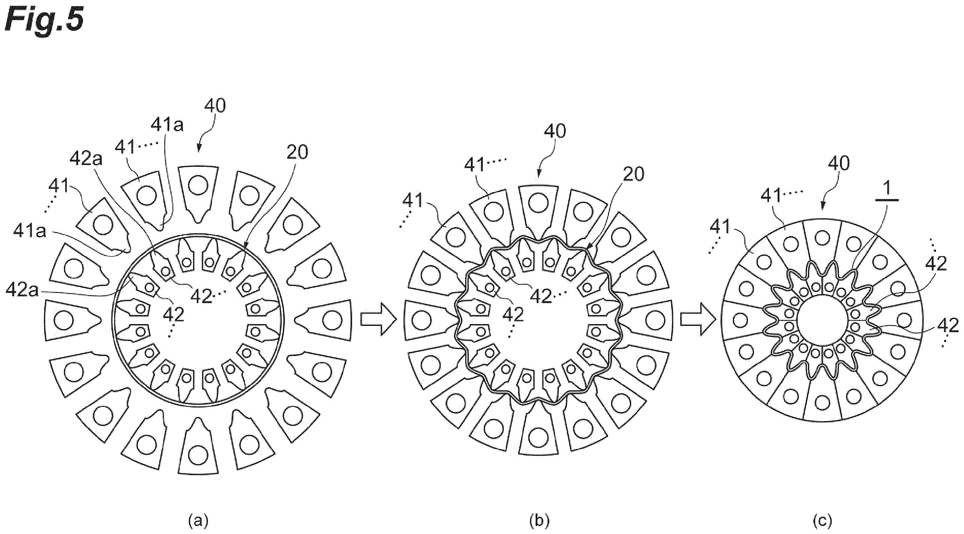

Step S20 is a step of forming the shape of the tooth 4 in the annular member 20. In Step S20, the molding device 40 illustrated in FIG. 5 is used.

The molding device 40 includes a plurality of outer peripheral molds 41 which are disposed on the outer peripheral side of the set annular member 20 and a plurality of inner peripheral molds 42 which are disposed on the inner peripheral side thereof. The outer peripheral mold 41 is a mold that molds the shapes of the tooth 4 and the valley portion 6 on the outer peripheral side of the spur gear component 1. The plurality of outer peripheral molds 41 are disposed at equal pitches in the circumferential direction along the outer peripheral surface of the annular member 20. The inner peripheral mold 42 is a mold that molds the shapes of the mountain portion 7 and the valley portion 8 on the inner peripheral side of the spur gear component 1. The plurality of inner peripheral molds 42 are disposed at equal pitches in the circumferential direction along the inner peripheral surface of the annular member 20.

As illustrated in FIG. 5(a), the outer peripheral mold 41 includes a protrusion portion 41a which protrudes toward the inner peripheral side. The protrusion portion 41a has a shape corresponding to the completed tooth 4. Further, when the pair of outer peripheral molds 41 adjacent to each other in the circumferential direction are combined with each other, the pair of protrusion portions 41a are combined with each other so that the shape of the valley portion 6 is formed. As illustrated in FIG. 5(a), the inner peripheral mold 42 includes a protrusion portion 42a which protrudes toward the outer peripheral side. The protrusion portion 42a has a shape corresponding to the completed valley portion 8. Further, when the pair of inner peripheral molds 42 adjacent to each other in the circumferential direction are combined with each other, the pair of protrusion portions 42a are combined with each other so that the shape of the mountain portion 7 is formed.

In Step S20, the outer peripheral mold 41 and the inner peripheral mold 42 are pressed against the annular member 20 in the radial direction in a heated state to form the shape of the tooth 4. Specifically, as illustrated in FIG. 5(a), the annular member 20 is set on the molds 41 and 42 set at the initial state position. At this time, the plurality of outer peripheral molds 41 are disposed to be separated from each other in the circumferential direction at positions separated from the annular member 20 toward the outer peripheral side. The plurality of inner peripheral molds 42 are disposed to be separated from each other in the circumferential direction at positions contacting the inner peripheral surface of the annular member 20 at the front end of the protrusion portion 42a. Next, as illustrated in FIG. 5(b), the outer peripheral mold 41 on the outer peripheral side is moved toward the inner peripheral side and is pressed against the annular member 20 to deform the annular member 20. At this time, the inner peripheral mold 42 also moves toward the inner peripheral side while being interlocked with the movement of the outer peripheral mold 41. Accordingly, as illustrated in FIG. 5(c), when the molds 41 and 42 are closed, the annular member 20 is molded into the shape of the spur gear component 1. As described above, the spur gear component 1 illustrated in FIG. 6 is completed.

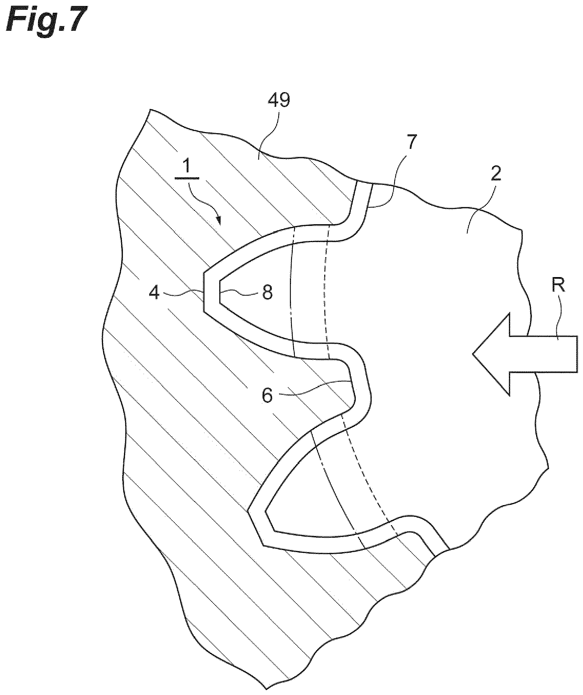

Step S30 is a step of molding the base portion 2 in the spur gear component 1. In Step S30, insert-molding is performed by using the mold 49. As illustrated in FIG. 7, the mold is closed while the spur gear component 1 is disposed in the mold 49. Then, a resin material R is injected into the internal space inside the mold 47. Accordingly, the base portion 2 is formed by the resin molded body fixed to the spur gear component 1. At this time, the resin material R of the base portion 2 is fixed to the spur gear component 1 so as to bite into the valley portion 8 on the inner peripheral side of the spur gear component 1. As described above, the spur gear 3 illustrated in FIG. 1 is completed. Additionally, the insert-molding was performed by inserting one molded spur gear component 1 into the mold 49, but may be performed by two or more spur gear components 1 into the mold 49.

Next, the action and effect of the spur gear component 1, the spur gear 3, and the method of manufacturing the spur gear component 1 according to this embodiment will be described.

The spur gear component 1 according to this embodiment includes the fiber material 10 having a shape corresponding to the arrangement pattern of the plurality of teeth 4 and wound in a spiral shape around the center axis. In this case, since the plurality of teeth 4 is composed of the wound fiber material 10, the strength of the tooth 4 can be made higher than that of the tooth of the spur gear formed by molding only the resin material.

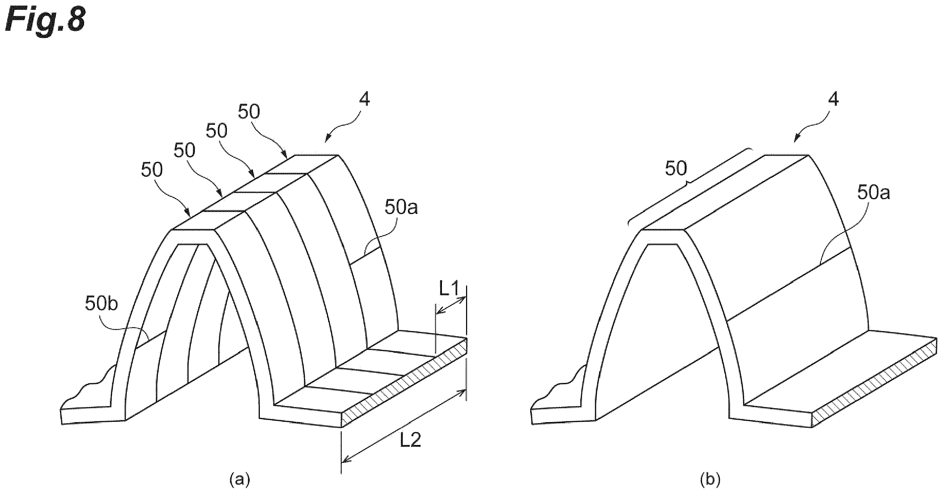

For example, when the spur gear component 1 is formed by one continuous fiber material 10, a cut portion (an end portion 10a) of the fiber material 10 illustrated in FIG. 2(b) is formed at a winding starting end portion and a winding finishing end portion of the fiber material 10. Such a cut portion is a portion that decreases the strength of the tooth 4. Thus, for example, when there is a portion in which the cut portions are arranged in parallel over the entire width of the tooth 4, the strength of the tooth 4 at that position decreases. For example, since an end portion 50a of FIG. 8(b) is a portion in which the end portions of the plurality of bundled fiber materials 10 are collectively cut, the cut portions of the fiber materials 10 are arranged in parallel over the entire width of the tooth 4.

In contrast, in the spur gear component 1 according to this embodiment, the fiber material 10 is wound in a spiral shape. In this case, the cut portion is formed at the winding starting end portion and the winding finishing end portion of the fiber material, but the fiber material 10 extends continuously without cutting in another orbital portion arranged in parallel in the axial direction (for example, see FIG. 2(b)). In this way, it is possible to prevent a portion in which the cut portion of the fiber material 10 is continuous in the entire axial direction, that is, the entire length of the width of the tooth in the spur gear component 1. As described above, the strength of the spur gear 3 can be improved.

In the spur gear component 1, one end portion 10a and the other end portion 10b of the fiber material 10 in the longitudinal direction are disposed at different positions in the circumferential direction (see FIG. 6). Accordingly, one end portion 10a and the other end portion 10b of the fiber material 10 are the portions of the cut portions of the fiber material 10 that decrease the strength in the spur gear component 1. When one end portion 10a and the other end portion 10b are shifted in the circumferential direction, it is possible to suppress a portion where the strength decreases from being concentrated at a specific position in the circumferential direction.

In the spur gear component 1, the fiber material 10 is wound in parallel in the axial direction. In this case, since the fiber material 10 is wound in parallel, the fiber material 10 can easily follow the shape of the mold when molding the arrangement pattern of the teeth 4.

The spur gear 3 according to this embodiment is the spur gear 3 including the spur gear component 1 which includes a plurality of teeth protruding in the radial direction, extending in the axial direction, and arranged equal pitches in the circumferential direction and the base portion 2 which is formed on the inner peripheral side of the spur gear component 1, the spur gear 3 includes the fiber material 10 having a shape corresponding to the arrangement pattern of the plurality of teeth 4 and wound in a spiral shape around the center axis and the base portion 2 is formed by the resin molded body fixed to the spur gear component 1.

According to the spur gear 3 according to this embodiment, the same action and effect as the spur gear component 1 can be obtained. Further, the base portion 2 is formed by the resin molded body fixed to the spur gear component 1. In this way, since a portion that does not require strength compared to the portion of the tooth 4 is formed by the resin molded body, the weight of the entire spur gear 3 can be made light.

A method of manufacturing the spur gear component 1 according to this embodiment is a method of manufacturing the spur gear component 1 including the plurality of teeth 4 protruding in the radial direction, extending in the axial direction, and arranged at equal pitches in the circumferential direction and includes a step of forming the annular member 20 by winding the fiber material 10 in a spiral shape around the center axis and a step of forming the shape of the tooth 4 in the annular member 20.

According to the method of manufacturing the spur gear component 1 according to this embodiment, the same action and effect as the spur gear component 1 can be obtained.

In the method of manufacturing the spur gear component 1, in the step of forming the shape of the tooth 4, the inner peripheral side of the annular member 20 may be supported by the inner peripheral mold 42 and the plurality of outer peripheral molds 41 divided in the circumferential direction may be pressed against the annular member 20 from the outer peripheral side to form the shape of the tooth 4. In this case, the tooth 4 having a shape corresponding to the shapes of the molds 41 and 42 can be easily formed on the front surface of the annular member 20.

The present invention is not limited to the above-described embodiment.

For example, in the above-described embodiment, the annular member 20 was formed by winding one continuous fiber material 10 in a spiral shape when forming the annular member 20. Instead, when the fiber material 10 runs out while winding the fiber material 10 in order to form the annular member 20, the winding may be resumed by setting a new fiber material 10. Further, the annular member 20 may be formed by winding the plurality of fiber materials 10 in a bundle. A state in which the plurality of fiber materials 10 are bundled may be, for example, a tow prepreg.

Further, a band-shaped member 50 illustrated in FIG. 8(a) may be prepared by combining the plurality of fiber materials 10, an annular member may be formed by winding the band-shaped member 50 in a spiral shape, and the arrangement pattern of the teeth 4 may be formed in the annular member. A width dimension L1 of the band-shaped member 50 in the width direction is smaller than the width dimension of the tooth 4. A width dimension L2 of the tooth 4 is a dimension of the sum of the width dimensions L1 of the plurality of band-shaped members 50. The end portions 50a and 50b of the band-shaped member 50 in the longitudinal direction are disposed at different positions in the circumferential direction. Additionally, in the example illustrated in FIG. 8(a), the end portion 50b corresponds to the winding starting position of the band-shaped member 50 and the end portion 50a corresponds to the winding finishing position of the band-shaped member 50. When forming the annular member, the winding of the band-shaped member 50 starts from the position of the end portion 50b. Further, a first layer is formed by winding the band-shaped member 50 in a spiral shape a plurality of times (here, four turns, but the present invention is not limited thereto) while shifting the axial positions. Then, a plurality of layers are formed by winding the band-shaped member 50 in a spiral shape in a reciprocating manner in the axial direction. Then, the winding ends at the position of the end portion 50a. Additionally, the layer of the band-shaped member 50 may be one layer.

Since the end portions 50a and 50b of the band-shaped member 50 in the winding direction correspond to the cut portions of the fiber material 10, the end portions serve as portions that affect the strength of the tooth 4. In contrast, the plurality of band-shaped members 50 are disposed within the width dimension L2 of the tooth 4 of the spur gear component 1. In the end portions 50a and 50b corresponding to the cut portions and other portions arranged in parallel in the axial direction, the band-shaped member 50 (that is, the fiber material 10) extends continuously without cutting. For example, as illustrated in FIG. 8(b), when the end portion 50a of the band-shaped member 50 extends in the entire length of the width of the tooth 4, the cut portion of the fiber material 10 is formed over the entire length of the width of the tooth 4 of the spur gear component 1. In this case, there is concern that the strength of the tooth 4 may decrease. On the other hand, in the form illustrated in FIG. 8(a), it is possible to prevent a portion in which the cut portion of the fiber material 10 is continuous in the entire axial direction, that is, the entire length of the width of the tooth. Further, it is possible to prevent the cut portion of the fiber material 10 from being concentrated at a specific position by shifting the positions of the end portion 50a and the end portion 50b in the circumferential direction.

### Reference Signs List

1: spur gear component, 2: base portion, 3: spur gear, 4: tooth, 10: fiber material, 20: annular member, 41: outer peripheral mold, 42: inner peripheral mold.

## Claims

1. A spur gear component including a plurality of teeth protruding in a radial direction, extending in an axial direction, and arranged at equal pitches in a circumferential direction, the spur gear component comprising:
a fiber material having a shape corresponding to an arrangement pattern of the plurality of teeth and wound in a spiral shape around a center axis.

2. The spur gear component according to claim 1,
wherein one end portion and the other end portion of the fiber material in a longitudinal direction are disposed at different positions in the circumferential direction.

3. The spur gear component according to claim 1 or 2,
wherein the fiber material is wound in parallel in an axial direction.

4. A spur gear comprising:
a spur gear component that includes a plurality of teeth protruding in a radial direction, extending in an axial direction, and arranged at equal pitches in a circumferential direction; and
a base portion formed on an inner peripheral side of the spur gear component,
wherein the spur gear comprises a fiber material having a shape corresponding to an arrangement pattern of the plurality of teeth and wound in a spiral shape around a center axis, and
wherein the base portion is formed by a resin molded body fixed to the spur gear component.

5. A method of manufacturing a spur gear component including a plurality of teeth protruding in a radial direction, extending in an axial direction, and arranged at equal pitches in a circumferential direction, comprising:
forming an annular member by winding a fiber material in a spiral shape around a center axis; and
forming a shape of the tooth in the annular member.

6. The spur gear component manufacturing method according to claim 5,
wherein in the forming of the shape of the tooth, an inner peripheral side of the annular member is supported by an inner peripheral mold and a plurality of outer peripheral molds divided in a circumferential direction are pressed against the annular member from an outer peripheral side to form the shape of the tooth.
